# EUROPEAN PATENT APPLICATION

(11) **EP 4 776 342 A1**
(43) Date of publication of application: **15.07.2026**
(21) Application number: 25150924.6
(22) Date of filing: 09.01.2025
(51) Int. Cl.: H01M 4/36, H01M 4/38

(54) **LITHIUM METAL ANODE WITH A COMPOSITE COATING**

(71) Applicant: CSEM Centre Suisse d'Electronique et de Microtechnique SA - Recherche et Développement, 2002 Neuchâtel (CH)
(72) Inventor: SROUT, Mohammed, 2000 Neuchâtel (CH); FU, Chengyin, 2000 Neuchâtel (CH); INGENITO, Andrea, 2000 Neuchâtel (CH)
(74) Representative: e-Patent SA

(57) **Abstract**

Anode (1) for a rechargeable cell, comprising:
- a lithium layer (5);
- a composite coating (7; 7a, 7b) provided on said lithium layer (5), said composite coating (7; 7a, 7b) comprising a first metal other than lithium and at least one inorganic metallic compound, said first metal and said at least one inorganic metallic compound being intermingled in at least part of said composite coating.

## Description

### Technical field

The present invention relates to rechargeable cells. In particular, it relates to a lithium metal anode for such a cell, said anode being provided with a composite coating.

### State of the Art

One of the main challenges that are still hindering the use of Li metal as an anode in the next generation Li-metal batteries with either solid or liquid electrolytes is its elevated reactivity. Therefore, the importance of developing a stable and robust interfacial protective layer (a-SEI) that enables high interface stability between the lithium anode and electrolyte (liquid or solid) and stabilizes the Li plating/stripping process on the lithium anode while cycling.

Such layers are intended to mitigate the concentration gradient of Li⁺ ions and equalize the uneven distribution of electrical current in the anode, all while maintaining cost-effectiveness and high energy density. In this regard, many coating solutions have been proposed and proved to be effective for regulating Li deposition and blocking Li dendrite growth to varying extents. The applied coatings include inorganic artificial SEI layers (e.g., lithium phosphorus oxynitride (LiPON), Al₂O₃, LiNs, Li-halides, etc.), organic coatings, hybrid (organic/inorganic) coatings and Li-rich alloys.

Thin inorganic coatings such as LiF, Li₃N, LiPON, or even the recently developed mixed inorganic compounds (e.g., LiF/LiCI) are widely recognized for their ability to efficiently conduct Li⁺ ions at room temperature while exhibiting improved stability against Li metal compared to the organic compounds. These coatings enable the rapid transfer of Li⁺ ions and help alleviate the Li⁺ concentration gradient at the anode/electrolyte interface while acting as electron barrier at the interface. However, these types of coatings are very brittle and break easily during the Li plating/stripping process due to the high- volume change and uneven Li plating on the surface of the Li anode.

On the other hand, organic coatings can also provide acceptable ionic conduction properties, together with their superior mechanical deformability and capacity to host the volume changes occurring during cycling compared to the inorganic ones, but most of them suffer from chemical instability and low-voltage instability when used as coatings for Li metal anode. Moreover, their softness limits their ability of suppressing dendrite propagation which hinders their use as efficient coatings for Li metal anode.

Besides, combining both inorganic and organic materials in one hybrid or multilayer coating in order to benefit from their complementary attractive properties, mainly, the combined merits of flexibility and rigidity is regarded as promising strategy towards a stable and longer lifetime Li metal anode. However, to optimize the composition and structure of such a coating and confirm its reproducibility while using organic solvents (with high reactivity towards Li) to guarantee a robust coated Li metal anode is still very challenging.

Li-rich alloy coatings are another type of coatings that are widely investigated, and which are known to facilitate the uniform distribution of current density during cycling, leading to homogeneous and denser Li plating/stripping behavior (compared to pure Li) which can prolong the lifespan of the Li- metal anode, and therefore the battery. However, this strategy still does not resolve the high reactivity issue of the Li anode with the electrolyte, nor the dendritic lithium growth at high current rates.

A. Hu, W. Chen, X. Du, Y. Hu, T. Lei, H. Wang, L. Xue, Y. Li, H. Sun, Y. Yan, J. Long, C. Shu, J. Zhu, B. Li, X. Wang, J. Xiong, energy and environmental science, An artificial hybrid interphase for an ultrahigh-rate and practical lithium metal anode, 14 4115-4124, 2021. https://doi.org/10.1039/d1ee00508a describes such a Li-rich alloy coating for an anode for a lithium metal battery, which is provided with an artificial hybrid solid electrolyte interphase layer comprising wet deposited lithium-antimony alloy and lithium fluoride. Wet deposition processes do not allow good control of the chemical composition of the layer, leading to difficult adaptability to different in-use conditions such as different electrolytes.

US2024/243264 describes various embodiments of lithium anodes provided with various configurations of cover films comprising metals, passivation layers etc., deposited by PVD coating. However, this solution is not optimal, and is limited in respect of the ability to tune the chemical composition of the film.

The aim of the present invention is hence to propose a lithium anode for a rechargeable battery, in which at least some of the above-mentioned defects are at least partially overcome.

### Disclosure of the invention

More precisely, the invention relates to an anode for a rechargeable cell, as defined by claim 1. This anode comprises:
- a lithium layer, which may be provided on a substrate or may be a standalone lithium metal ribbon or sheet;
- a composite coating provided on said lithium layer, said composite coating comprising a first metal other than lithium and at least one inorganic metallic compound, said first metal and said at least one inorganic metallic compound being intermingled in at least part of said composite coating. Lithium may also be present in addition to the first metal, due to diffusion at the interface and/or reaction with a vaporised target during deposition.

This combination of both an inorganic metallic compound, which may be a lithium compound or another metallic compound, with a non-lithium metal or metal alloy, in one of the composite coating configurations discussed below, forms a mixed conducting interphase SEI which protects the lithium layer, improves ionic conductivity, improves electron distribution at the surface of the electrode, improves stability of the SEI, and also provides more accurate passivation, therefore enhancing its performance, particularly in the useable number of cycles of the cell's life.

Advantageously, said at least one inorganic metallic compound is an inorganic lithium compound and preferably comprises at least one of LiF, LiCI, LiBr, Lil, LiOₓ, LiNₓ or LiₓCO_{y}. A preference for LiF and LiI is indicated.

Alternatively, said at least one inorganic metallic compound may be a metal oxide or metal salt, and preferably comprises at least one of AlOₓ, ZnOₓ, Mgₓ, MnₓO_{y}, MgF₂, ZnF₂, SnF₂, BiF₃, MnF₂.

Advantageously, said first metal comprises or consists of one or more of magnesium, silver, tin, aluminium, bismuth, gold, zinc, platinum, silicon, antimony, or their alloys. A preference for Mg and Ag is indicated, since they form solid solutions with Li. Alternatively, other metals that alloy with Li such as Zn, Sb and Bi may be indicated if a seed layer is desired.

Advantageously, said lithium layer is natively passivated. With the arrangement of the invention, it has been found that processing steps to create a passivation layer are not necessary, and native passivation can be used, which can be controlled by careful handling of the Li and limiting its exposure to oxygen, carbon dioxide, dry air etc. However, this does not have to be the case, e.g. if vacuum is maintained during processing such that said lithium layer does not get exposed to passivating species.

In one configuration, said composite layer comprises a metal sublayer and a composite sublayer, said metal sublayer being situated between said lithium layer and said composite sublayer, said composite sublayer comprising said first metal and said at least one inorganic metallic compound, said first metal and said at least one inorganic metallic compound being intermingled in at least part of said composite sublayer. The metal sublayer may be of at least one second metal which is the same or different to said first metal, and may, for instance, be a seed lithiophilic layer such as Zn or Ag.

In one variant, said composite layer is substantially homogeneous. This enables simple manufacture e.g. by various PVD methods.

In another variant, said composite layer is provided with a concentration gradient, in which said composite layer is richer in said first metal and weaker in said at least one inorganic metallic compound proximate to said lithium layer, and weaker in said first metal and richer in said at least one inorganic metallic compound remote from said lithium layer. This enables tuning of the composite layer's properties to optimise them at both the interface with the lithium metal layer and at its free surface which is in contact with the electrolyte when installed in a battery.

Advantageously, the free metal content of said first metal (i.e. the proportion of metal atoms which are in metallic form rather than compounded with nonmetal atoms) in said composite layer (as appropriate) is 5-95 wt%, preferably 50-80 wt%, further preferably 60-70 wt%.

Advantageously, the inorganic metal compound content in the composite layer is between 1-80 wt%, preferably 5-60 wt%, further preferably 20-40 wt%.

The anode as described above can be produced by a method comprising steps of:
- providing said lithium layer, either as a standalone lithium ribbon, sheet or similar;
- physical vapor depositing said composite layer on said lithium layer, typically directly thereupon without a deposition step resulting in the deposition of an intervening layer.

Using PVD in this manner gives excellent controllability of the chemical properties of the composite layer.

This PVD may comprise at least one of thermal evaporation, e.g. of an inorganic metal compound, co-evaporation of several substances, sputtering, or co-sputtering of several sputtering targets, depending on the configuration of the composite layer. Co-evaporation and co-sputtering enable relatively easy tuning of the stoichiometry of the composite layer.

### Brief description of the drawings

Further details of the description will become apparent upon reading the detailed description in reference to the appended figures, which illustrate:
- Figure 1: a schematic representation of a first variant of a lithium metal anode according to the invention;
- Figure 2: a schematic representation of a second variant of a lithium metal anode according to the invention;
- Figure 3: a schematic representation of a third variant of a lithium metal anode according to the invention;
- Figure 4: a schematic representation of co-evaporating (sputtering) the compostite layer;
- Figure 5: graphs of comparative experimental results of cells provided with three different anodes produced according to the invention, compared with a control anode which is uncoated.

### Embodiments of the invention

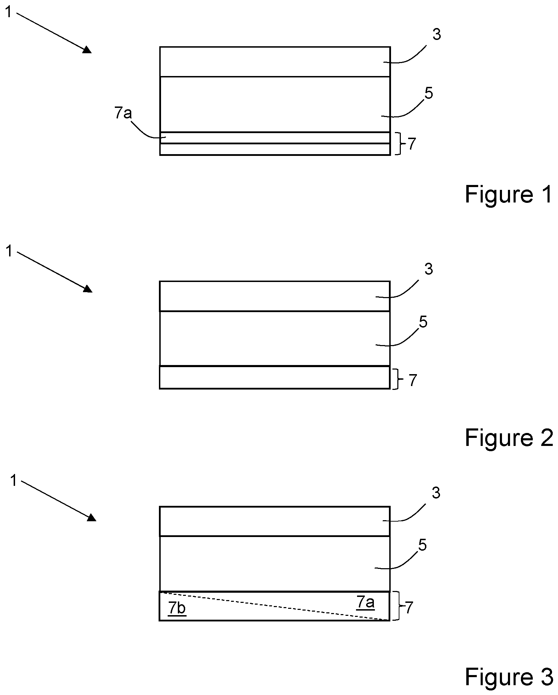

Figure 1 schematically illustrates a first variant of a lithium metal anode 1 according to the invention, intended for use in a lithium-based battery such as a lithium-metal or lithium-sulphur battery with either solid (solid-polymer, inorganic-polymer composite, or solid inorganic electrolytes), liquid, gel or combination of at least two of the previously mentioned electrolytes.

Anode 1 comprises an optional substrate 3, which can be made of e.g. copper, nickel, stainless steel, an electrically conductive polymer, a polymer and combinations or alloys thereof. The substrate can be coated with other metals such as magnesium, zin, silver or other lithium-alloys of such materials including, for example, lithium-silver alloys, lithium-magnesium alloys, lithium-zinc alloys or similar, and may serve as a current collector.

If the substrate 3 is present, a lithium metal layer 5 is provided directly or indirectly thereupon, e.g. by being physical vapour deposited (PVD) or otherwise bonded thereupon or to a bonding, interface, or other conductive layer (not illustrated) provided upon the substrate 3, such as a seed lithiophilic layer e.g. of Zn, Ag or similar. In the case of configurations without a substrate 5, a lithium ribbon or lithium sheet can be used, as is generally known.

Whether the lithium metal layer 5 is on a substrate or not, its free surface is typically natively-passivated by exposure to ambient oxygen and/or carbon dioxide, and this can be minimized and/or controlled by keeping the lithium metal in a controlled environment during manufacture of the anode 1. This avoids a separate passivation step.

Upon the lithium metal layer 5 is provided a composite coating 7, which can have various configurations, as illustrated in figures 1-3. This is typically provided directly upon the lithium metal layer 5 (more specifically on its native passivation), without an intervening layer being deposited thereupon.

Generically, the composite coating 7 acts as a protective coating film over the lithium metal layer 5 and comprises a first metal other than lithium and at least one inorganic metallic compound, said first metal and said at least one inorganic metallic compound being intermingled and hence in intimate contact in at least part of the thickness of said composite coating, i.e. not simply in contact at the interface with the adjacent layer.

In the embodiment of figure 1, the composite coating 7 is formed as a bilayer, the nearest sublayer 7a to the lithium metal layer 5 being made of a second metal which may be the same or different to said first metal other than lithium (e.g. Mg, Ag; Zn, Sn, Bi etc., that either alloys or forms a solid solution with Li), and the sublayer 7b situated further from the lithium metal layer 5 being a layer of composite comprising said first metal and said inorganic metallic compound. As a result, sublayer 7a is referred to in the following as the "metal sublayer" and the sublayer 7b is referred to as the "composite sublayer".

In the embodiment of figure 2, the composite coating 7 is substantially homogeneous, comprising said first metal and said at least one inorganic metallic compound intermingled together.

In the embodiment of figure 3, the composite coating 7 is unitary, without a demarcated transmission, and with a concentration gradient throughout its thickness, as illustrated schematically by the dashed line. In the portion 7a of the composite coating 7 which is nearest to the lithium metal layer 5 being richer in said first metal and weaker in said inorganic metallic compound, and the portion 7b of the composite coating 7 which is further from said lithium metal layer 5 being weaker in said first metal and richer in said inorganic metal compound. This concentration gradient can also be applied to the composite layer 7b of the embodiment of figure 1.

In each case, the composite coating 7 may have a thickness adapted to the type of battery in which the anode 1 will be integrated, more particularly depending on what type of solid or liquid electrolyte is used. Typically, this thickness is between 10 nm and 5 µm, typically between 100 nm and 1 µm. In the case of the bilayer arrangement of figure 1, the metal layer 7a is typically between 10 nm and 500 nm thick and the composite sublayer 7b is typically between 10 nm and 1 µm thick.

The first metal is typically a lithophilic metal such as Mg, Ag, Sn, Al, Bi, Au, Zn, Pt, Mn or a combination of at least two thereof. Mg and Ag are particularly advantageous if a solid solution with Li metal of the lithium metal layer 5 is desired, whereas Zn and Bi are particularly useful in the metal sublayer 7a in the embodiment of figure 1 as a seed layer.

The inorganic metal compound is typically an inorganic lithium compound such as a Li-halide compound such as LiF, Lil, LiCI, LiBr, or alternatively another inorganic lithium compound such as LiOₓ, Li₂CO₃, LiN₃ etc., or any combination thereof. Alternatively, non-lithium oxides such as AlOₓ, ZnOₓ, MgOₓ, MnₓO_{y}, non-lithium halides such as MgF₂, SnF₂, ZnF₂, BiF₃, MnF₂ or similar can be used.

The free metal content in the composite layer 7 or composite sublayer 7b (as appropriate) is typically 5-95 wt%, preferably 50-80 wt%, further preferably 60-70 wt%, and includes only the metal content in free, metallic, i.e. uncompounded form. The inorganic metal compound content in the composite layer 7 or composite sublayer 7b (as appropriate) is typically between 1-80 wt%, preferably 5-60 wt%, further preferably 20-40 wt%.

In terms of the deposition of the composite layer 7, this is carried out by physical vapour deposition, typically evaporation and/or sputtering. For instance, in the embodiment of figure 1, the metal sublayer 7a can be deposited by sputtering or thermal evaporation as is generally known, with the composite sublayer 7b being prepared e.g. by thermal evaporating or sputtering a source comprising an inorganic metal compound or a precursor material as discussed above, but this possibility does not permit controlling the chemical composition of the coating other than by changing the composition of the source. For instance, in the case of the composite sublayer 7b of the embodiment of figure 1 or the composite layer 7 of figure 2, thermally evaporating an MgF₂ target causes a reaction with the lithium layer 5, leading to the formation of a composite layer of MgLi alloy and LiF.

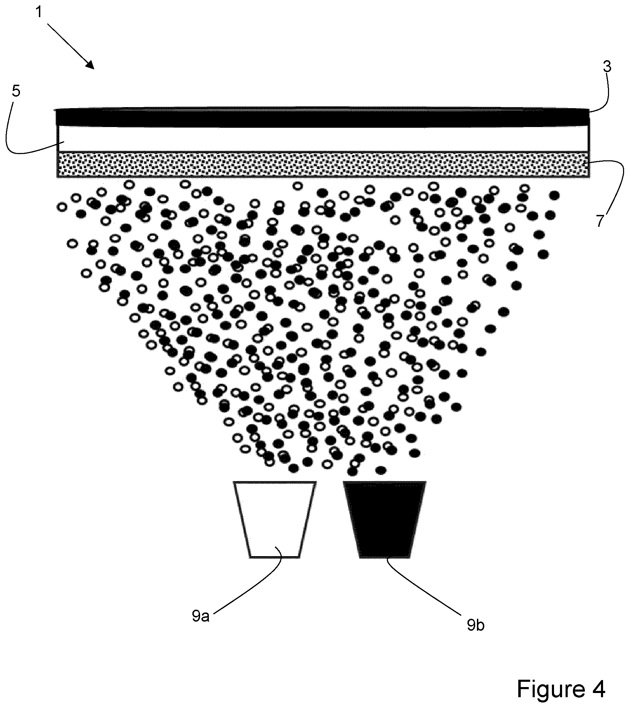

The more advantageous solution for depositing the composite layer 7 of the embodiments of figures 2 and 3 and/or sublayer 7b of the embodiment of figure 1 is co-evaporation or co-sputtering, as illustrated in figure 4. Co-sputtering is generally known, and its application in the present case involves a pair of sputtering targets 7a, 7b, one of which contains the metal of the composite layer 7 and/or composite sublayer 7b, the other containing one or more inorganic metal compounds as discussed above. Alternatively, one or more of the targets 7a, 7b is made of a precursor material which reacts with the lithium layer 5 and/or the other precursor material during deposition. Likewise, in co-evaporation, samples of the various substances are heated and evaporated simultaneously in the same deposition chamber.

By varying the sputtering power, or the heating temperature of evaporation samples, the above-described concentration gradients can be generated, as is generally known.

It should be noted that there is mutual co-diffusion between the Li layer 5 and the metal of the composite layer 7 which is in contact therewith (i.e. the metal of the metal sublayer 7a of the embodiment of figure 1 or of the composite layer 7 of the embodiments of figures 2 and 3), if this metal forms solid solutions with lithium.

By using PVD deposition, the chemical composition of the composite sublayer 7b and/or the composite layer 7, as appropriate, can be precisely adjusted according to the required properties and compatibility with the electrolyte being used. Furthermore, higher purity of the deposited material is possible than with wet chemical processes. Also, the ionic and electrical conductivity of the composite coating 7 can be adjusted by the choice of the first metal and the inorganic metallic compound, and also on their ratio. Finally, the composite layer 7 can improve the mechanical properties of the anode 1.

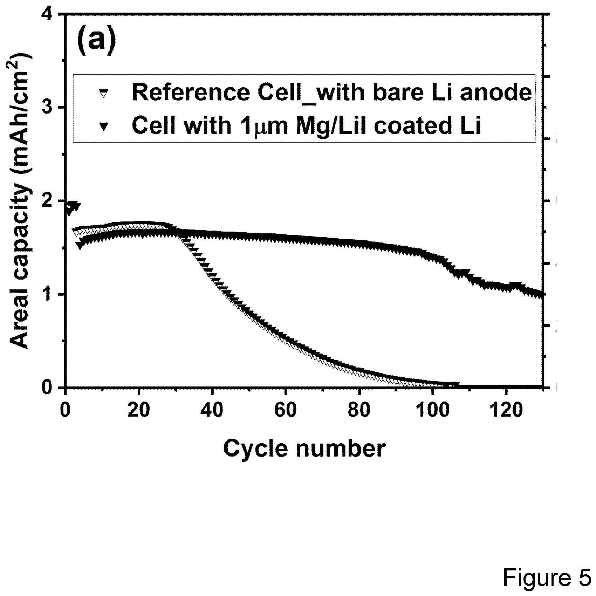

Figures 5-7 illustrate graphs galvanostatic cycling experimental results obtained with cells provided with lithium anodes 1 according to the embodiment of figure 2. The various test cells were provided with anodes 1 on a 25 µm lithium layer 5 on a 9 µm copper substrate, in NMC622//Li cells. The NMC622 cathode loading was 2 mAh/cm², and the applied current during cycling was 0.5 mA/cm². The reference cell was the same, but without any composite layer 7 provided thereupon, i.e. a bare lithium anode 5.

In the test reported in figure 5, the composite layer 7 was a Mg/Lil composite of about 1 um thick with the weight ratio of 70 wt% of Mg and 30 wt% of Lil, with a carbonate-based solid-polymer electrolyte of 1 M LiTFSI in PVCA-FEC.

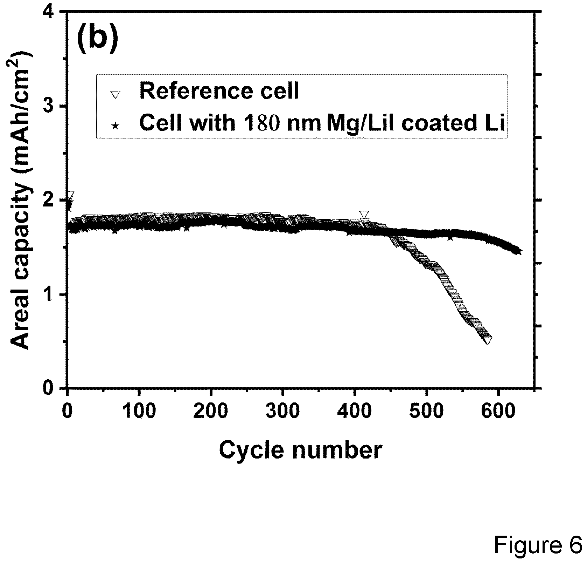

In the test reported in figure 6, the composite layer 7 was an Mg/Lil composite of about 180 nm thick with the weight ratio of 70wt% of Mg and 30wt% of Lil, using a liquid HLCE electrolyte of 2.3M LiFSI in TTE/DME.

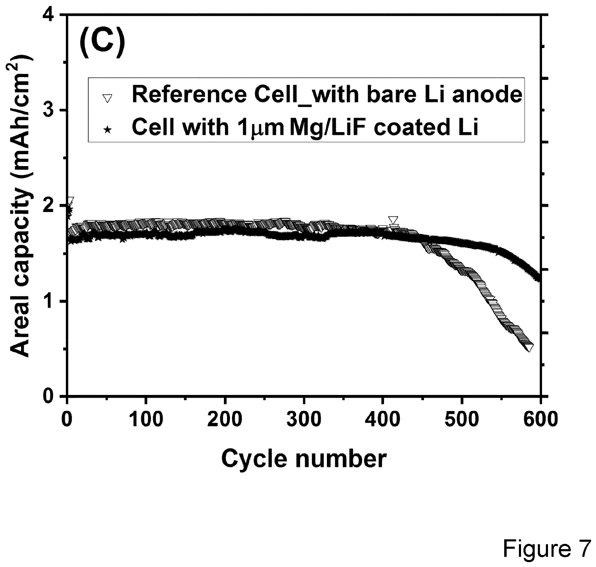

In the test reported in figure 7, the composite layer 7 was an Mg/LiF composite of about 1 µm thick with the weight ratio of 70wt% of Mg and 30 wt% of LiF, again using a liquid electrolyte.

As can be clearly seen from the graphs, the number of useful cycles of the cell was increased by about 100-200 cycles by the implementation of a composite layer 7 according to the invention, which represents a significant increase in battery lifetime over a cell provided with an uncoated lithium anode.

Although the invention has been described in terms of specific embodiments, further variations are possible without departing from the scope of the appended claims.

## Claims

1. Anode (1) for a rechargeable cell, comprising:
- a lithium layer (5);
- a composite coating (7; 7a, 7b) provided on said lithium layer (5), said composite coating (7; 7a, 7b) comprising a first metal other than lithium and at least one inorganic metallic compound, said first metal and said at least one inorganic metallic compound being intermingled in at least part of said composite coating.

2. Anode (1) according to the preceding claim, wherein said at least one inorganic metallic compound is an inorganic lithium compound and preferably comprises at least one of:
- lithium fluoride;
- lithium chloride;
- lithium bromide;
- lithium iodide;
- lithium oxide;
- lithium nitride;
- lithium carbonate.

3. Anode (1) according to claim 1, wherein said at least one inorganic metallic compound is a metal oxide or metal salt, and preferably comprises at least one of:
- aluminium oxide;
- zinc oxide;
- magnesium oxide;
- one or more manganese oxides;
- manganese fluoride;
- zinc fluoride
- tin fluoride
- bismuth fluoride
- manganese fluoride.

4. Anode (1) according to any preceding claim, wherein said first metal comprises or consists of one or more of magnesium, silver, tin, aluminium, bismuth, gold, zinc, platinum.

5. Anode (1) according to any preceding claim, wherein said lithium layer (5) is natively passivated.

6. Anode (1) according to any preceding claim, wherein said composite layer (7) comprises a metal sublayer (7a) and a composite sublayer (7b), said metal sublayer (7a) being situated between said lithium layer (5) and said composite sublayer (7b), said composite sublayer (7b) comprising said first metal and said at least one inorganic metallic compound, said first metal and said at least one inorganic metallic compound being intermingled in at least part of said composite sublayer (7b).

7. Anode (1) according to the preceding claim, wherein said metal sublayer (7a) comprises at least one second metal which are the same or different to said first metal.

8. Anode (1) according to one of claims 1-4, wherein said composite layer (7) is substantially homogeneous.

9. Anode (1) according to one of claims 1-4, wherein said composite layer (7) is provided with a concentration gradient, in which said composite layer is richer in said first metal and weaker in said at least one inorganic metallic compound proximate to said lithium layer (5), and weaker in said first metal and richer in said at least one inorganic metallic compound remote from said lithium layer (5).

10. Anode (1) according to any preceding claim, wherein the free metal content of said first metal in said composite layer (7; 7a, 7b) is 5-95 wt%, preferably 50-80 wt%, further preferably 60-70 wt%.

11. Anode (1) according to any preceding claim, wherein the inorganic metal compound content in said composite layer (7; 7a, 7b) is between 1-80 wt%, preferably 5-60 wt%, further preferably 20-40 wt%.

12. Rechargeable cell comprising an anode (1) according to any preceding claim.

13. Method of producing an anode (1) according to any preceding claim, comprising steps of:
- providing said lithium layer (5);
- physical vapor depositing said composite layer (7; 7a, 7b) on said lithium layer (5).

14. Method according to the preceding claim, wherein said physical vapour deposition comprises at least one of:
- thermal evaporation;
- co-evaporation;
- sputtering;
- co-sputtering.

15. Anode (1) according to one of claims 1-11 manufactured by the method of one of claims 13-14.
